# EUROPEAN PATENT APPLICATION

(11) **EP 4 825 581 A1**
(43) Date of publication of application: **21.10.2026**
(21) Application number: 24903795.3
(22) Date of filing: 13.12.2024
(51) Int. Cl.: B32B 27/16, B32B 27/10, E04F 15/16

(54) **DECORATIVE SHEET**

(30) Priority: 14.12.2023 JP 2023211353
(71) Applicant: Toppan Holdings Inc., Tokyo 110-0016 (JP)
(72) Inventor: AKUTSU, Erika, Tokyo 110-0016 (JP); MURATA, Daisuke, Tokyo 110-0016 (JP); SASAKI, Noriko, Tokyo 110-0016 (JP)
(74) Representative: TBK
(86) International application number: PCT/JP2024/044260
(87) International publication number: WO 2025/127142

(57) **Abstract**

The present disclosure provides a technique that can suppress occurrence of stains or traces of stains caused by water absorption in a decorative sheet including a primary film layer containing paper and a pigment-containing layer. A decorative sheet (1) includes a primary film layer (2) containing paper; a pigment-containing layer (3) provided on the primary film layer (2) and containing a pigment and a binder resin; a primer layer (4) provided on the pigment-containing layer (3); and a surface protective layer (5) provided on the primer layer (4), wherein the primer layer (4) contains only a cured product of a first ionizing radiation curable resin as a cured resin, the first ionizing radiation curable resin being a first mixture of an acrylate and a methacrylate; and the surface protective layer (5) contains only a cured product of a second ionizing radiation curable resin as a cured resin and has a surface provided with an uneven structure including a plurality of ridge portions each protruding in a ridge shape.

## Description

### [Technical Field]

The present invention relates to decorative sheets.

### [Background Art]

Decorative sheets are used, for example, to decorate the surfaces of interior and exterior materials such as fittings, furniture, furnishing materials, and flooring materials, for the purpose of imparting aesthetic properties and durability to these materials. In general, decorative sheets are widely used in the form of decorative panels in which the decorative sheets are attached to the surfaces of substrates such as wood, wood boards, metal plates, non-flammable boards, paper substrates, or resin substrates via an adhesive or the like.

Aesthetic properties are imparted, for example, by forming patterns such as wood grain or stone grain using various printing methods. Decorative sheets having plain colors without patterns are sometimes preferred. The choice of whether patterned or not, or the choice of the type of pattern varies depending on the purposes and preferences.

Gloss of the surfaces is also important for the aesthetic properties of the decorative sheets. There are a variety of decorative sheets to choose from depending on the purposes and preferences, ranging from decorative sheets having mirror-like high gloss to decorative sheets having low gloss with no reflection at all.

As mentioned above, imparting durability is an important function of decorative sheets, in addition to imparting aesthetic properties. Durability is a comprehensive evaluation of scratch resistance or stain resistance, and whether these characteristics can be maintained over a long period of time. Although requirements may vary depending on the environment and circumstances in which the decorative sheets are used, decorative sheets with high performance are always in demand.

To impart durability, a surface protective layer is formed, in general, on the outermost surface of decorative sheets. To adjust gloss mentioned above, or to achieve low gloss in particular, it is common to add a matting agent (matting additive) to the surface protective layer.

Furthermore, decorative sheets preferably have processability such that they can withstand such processes as cutting or bending which are generally performed when forming decorative materials such as decorative panels.

For example, such a decorative sheet designed in consideration of aesthetic properties (low gloss), scratch resistance, and stain resistance is described in PTL 1.

### [Citation List]

### [Patent Literature]

PTL 1: JP2019119138A

### [Summary of the Invention]

The present invention aims to provide a technique that can suppress occurrence of stains or traces of stains caused by water absorption in a decorative sheet including a primary film layer containing paper and a pigment-containing layer.

According to an aspect of the present invention, there is provided a decorative sheet, including a primary film layer containing paper; a pigment-containing layer provided on the primary film layer and containing a pigment and a binder resin; a primer layer provided on the pigment-containing layer; and a surface protective layer provided on the primer layer, wherein the primer layer contains only a cured product of a first ionizing radiation curable resin as a cured resin, the first ionizing radiation curable resin being a first mixture of an acrylate and a methacrylate; and the surface protective layer contains only a cured product of a second ionizing radiation curable resin as a cured resin and has a surface provided with an uneven structure including a plurality of ridge portions each protruding in a ridge shape.

According to another aspect, there is provided the decorative sheet according to the above aspect, wherein in the primer layer, a proportion of a molar quantity of methacryloyl groups relative to a sum of a molar quantity of acryloyl groups and a molar quantity of methacryloyl groups is in the range of 3% or more and 50% or less.

According to still another aspect of the present invention, there is provided the decorative sheet according to either of the above aspects, wherein the methacrylate is a monofunctional, difunctional, or trifunctional methacrylate.

According to still another aspect of the present invention, there is provided the decorative sheet according to any one of the above aspects, wherein when a mass of the first ionizing radiation curable resin is 100 parts by mass, a mass of a filler in the primer layer is 10 parts by mass or less.

According to still another aspect of the present invention, there is provided the decorative sheet according to any one of the above aspects, wherein the second ionizing radiation curable resin is an acrylate or a second mixture of an acrylate and a methacrylate, the second mixture having a proportion of a molar quantity of methacryloyl groups relative to a sum of a molar quantity of acryloyl groups and a molar quantity of methacryloyl groups which is smaller than that in the first mixture.

According to still another aspect of the present invention, there is provided the decorative sheet according to any one of the above aspects, wherein the second ionizing radiation curable resin contains a bifunctional or higher acrylate including a repeating structure.

According to still another aspect of the present invention, there is provided the decorative sheet according to the above aspect, wherein the number of repeat units of the repeating structure is 3 or greater.

According to still another aspect of the present invention, there is provided the decorative sheet according to any one of the above aspects, wherein the primer layer has a thickness in the range of 0.5 µm or more and 10 µm or less.

According to still another aspect of the present invention, there is provided the decorative sheet according to any one of the above aspects, wherein the surface protective layer has a thickness in the range of 2 µm or more and 20 µm or less.

According to still another aspect of the present invention, there is provided the decorative sheet according to any one of the above aspects, wherein the surface protection layer further contains particles having an average particle size of 10 µm or less.

According to still another aspect of the present invention, there is provided the decorative sheet according to the above aspect, wherein when a mass of the second ionizing radiation curable resin is 100 parts by mass, a mass of the particles is in the range of 0.5 parts by mass or more and 10 parts by mass or less.

According to still another aspect of the present invention, there is provided the decorative sheet according to any one of the above aspects, wherein the uneven structure has a ratio RSm/Ra in the range of 10 or more and 800 or less, and preferably 10 or more and 700 or less, the ratio RSm/Ra being a ratio between an average length RSm of roughness curve elements and an arithmetic mean roughness Ra.

According to still another aspect of the present invention, there is provided the decorative sheet according to any one of the above aspects, wherein the surface protective layer has a specular gloss GS (60°) of 20 or less.

According to still another aspect of the present invention, there is provided a decorative material, including the decorative sheet according to any one of the above aspects; and a substrate to which the decorative sheet is attached.

According to still another aspect of the present invention, there is provided a method of producing a decorative sheet, including steps of forming a pigment-containing layer containing a pigment and a binder resin on a primary film layer containing paper; forming a first coating film on the pigment-containing layer, the first coating film containing only a first ionizing radiation curable resin as a resin, the first ionizing radiation curable resin being a first mixture of an acrylate and a methacrylate; partially curing the first coating film by performing a first irradiation step of irradiating the first coating film with ionizing radiation or UV light; forming a second coating film on the partially cured first coating film, the second coating film containing only a second ionizing radiation curable resin as a resin; and irradiating the first coating film and the second coating film with ionizing radiation or UV light to fully cure the first coating film and the second coating film.

According to still another aspect of the present invention, there is provided the method of producing a decorative sheet according to the above aspect, wherein fully curing the first coating film and the second coating film includes a second irradiation step of irradiating the second coating film with light having a wavelength of 200 nm or less; and a third irradiation step of, after the second irradiation step, either irradiating the first coating film and the second coating film with ionizing radiation, or irradiating the first coating film and the second coating film with UV light having a wavelength longer than that of the light used in the second irradiation step.

According to still another aspect of the present invention, there is provided the method of producing a decorative sheet according to either of the above aspects, wherein irradiation of the ionizing radiation or the UV light to the first coating film in the first irradiation step is performed so that a ratio of the number of C=C bonds after irradiation to the number of C=C bonds before irradiation is in the range of 5% or more and 80% or less.

According to still another aspect of the present invention, there is provided the method of producing a decorative sheet according to any one of the above aspects, wherein irradiation of the ionizing radiation or the UV light to the first coating film in the first irradiation step is performed so that an integrated irradiation quantity relative to a minimum integrated irradiation quantity required for fully curing the first coating film is in the range of 3% or more and 30% or less.

According to still another aspect of the present invention, there is provided the method of producing a decorative sheet according to any one of the above aspects, wherein irradiation of the ionizing radiation or the UV light to the first coating film in the first irradiation step is performed so that an absorbed dose relative to a minimum absorbed dose required for fully curing the first coating film is in the range of 0.2% or more and 50% or less.

According to the present invention, there is provided a technique that can suppress occurrence of stains or traces of stains caused by water absorption in a decorative sheet including a primary film layer containing paper and a pigment-containing layer.

### [Brief Description of the Drawings]

Fig. 1 is a cross-sectional view illustrating a decorative material including a decorative sheet according to an embodiment of the present invention.
Fig. 2 is a cross-sectional view illustrating a surface protective layer included in the decorative sheet of Fig. 1.
Fig. 3 is a microscope image of a surface protective layer included in a decorative sheet according to an example of the present invention.
Fig. 4 is a cross-sectional view which is a partial enlargement of the surface protective layer shown in Fig. 2.

### [Description of the Embodiments]

Referring to the drawings, some embodiments of the present invention will be described. The embodiments described below are more specific implementations of any of the aspects set forth above. The matters described below can be incorporated into the aspects set forth above, either alone or in combination.

The embodiments described below are merely example configurations for embodying the technical idea of the present invention, and the technical idea of the present invention should not limit the materials, shapes, structures, and the like of the components to those described below. Various modifications can be added to the technical ideas of the present invention within the technical scope recited in the claims.

It should be noted that components having the same or similar functions are denoted by the same reference signs in the drawings referred to below, and redundant description is omitted. The drawings are only schematic, and the relationship between dimensions in one direction and another direction, dimensions of a member and another member, and the like may be different from actual relationships.

### <1> Decorative material and decorative sheet

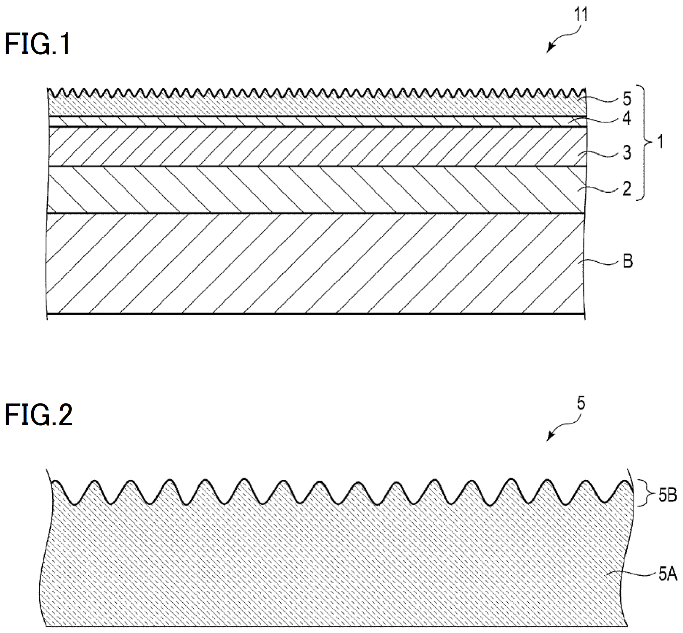

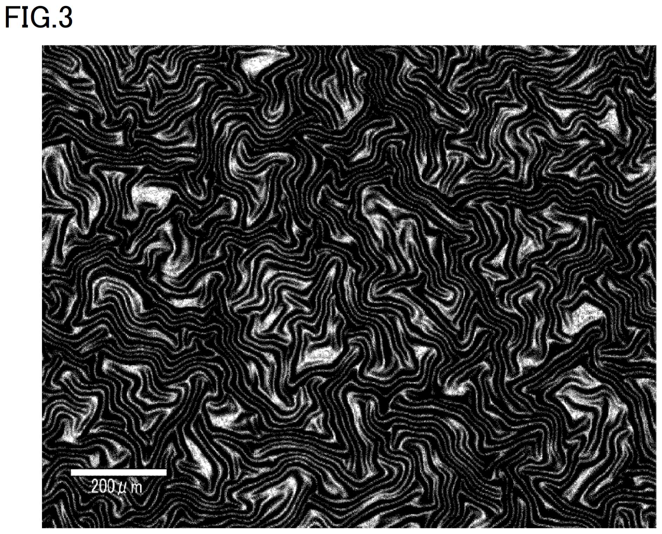

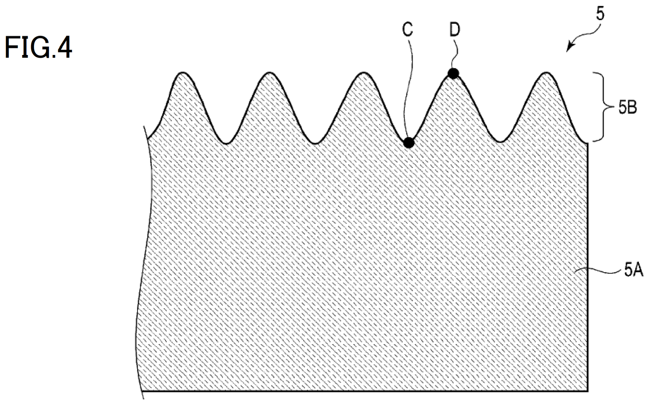

Fig. 1 is a cross-sectional view illustrating a decorative material including a decorative sheet according to an embodiment of the present invention. Fig. 2 is a cross-sectional view illustrating a surface protective layer included in the decorative sheet of Fig. 1. Fig. 3 is a microscope image of a surface layer included in a decorative sheet according to an example of the present invention. Fig. 4 is a cross-sectional view which is a partial enlargement of the surface protective layer shown in Fig. 2.

The cross sections shown in Figs. 2 and 4 are taken along the thickness direction of the surface protective layer. The microscope image shown in Fig. 3 is a plan-view image captured using a laser microscope (OLS-4000 manufactured by Olympus Corporation).

A decorative material 11 shown in Fig. 1 includes a substrate B and a decorative sheet 1 attached to the substrate B. The decorative material 11 in this example is a decorative panel. The decorative panel may be flat, or may be curved or folded. The decorative material 11 may have other shapes than a plate shape.

The substrate B in this example is a board material. The board material may, for example, be a wood board, inorganic board, metal board, or composite board made of multiple materials. The substrate B may have other shapes than a plate shape.

The decorative sheet 1 includes a primary film layer 2, a pigment-containing layer 3, a primer layer 4, and a surface protective layer 5. The pigment-containing layer 3, the primer layer 4, and the surface protective layer 5 are provided in this order on the surface of the primary film layer 2 facing away from the surface facing the substrate B. The decorative sheet 1 may further include one or more layers such as a transparent resin layer.

The components included in the decorative sheet 1 will be sequentially described below.

### <1.1> Primary film layer

The primary film layer 2 contains paper. The primary film layer 2 may have a single-layer structure, or may have a multilayer structure. According to an example, the entirety of the primary film layer 2 is made of paper. According to another example, the primary film layer 2 may have a multilayer structure in which at least the outermost layer facing the surface protective layer 5 is made of paper. The primary film layer 2, when having a multilayer structure, may include at least one layer made of a material other than paper, in addition to at least one layer made of paper.

Examples of the paper include tissue paper, resin-mixed paper, titanium paper, resin-impregnated paper, flame-resistant paper, and inorganic paper. The paper contained in the primary film layer 2 may be, for example, paper containing cellulose fibers. The primary film layer 2 can have various shapes such as a film shape, sheet shape, plate shape, and irregularly shaped body.

### <1.2> Pigment-containing layer

The pigment-containing layer 3 may be, for example, a continuous film obtained by applying an ink to one entire surface of the primary film layer 2. The layer contained in the pigment-containing layer 3 contains at least one of a white pigment and a colored pigment. The pigment-containing layer 3 can function as a concealing layer that conceals the substrate B or the primary film layer 2. The pigment-containing layer 3 can function as a flattening layer.

The pigment-containing layer 3 may have a single-layer structure, or may have a multilayer structure. If the pigment-containing layer 3 has a multilayer structure, all the layers may be continuous films, or all the layers may be discontinuous films, or at least one layer may be a continuous film and the remaining layers may be discontinuous films.

The pigment-containing layer 3 can be formed, for example, using a printing ink (or coating agent) obtained by dissolving or dispersing a matrix-forming binder resin and a pigment in a solvent.

Examples of the binder resin include various synthetic resins such as oil-based nitrocellulose resins, two-part urethane resins, acrylic resins, styrene-based resins, polyester-based resins, urethane-based resins, polyvinyl-based resins, alkyd resins, epoxy-based resins, melamine-based resins, fluorine-based resins, silicone-based resins, and rubber-based resins; and mixtures or copolymers thereof.

Examples of the pigment include inorganic pigments such as carbon black, titanium oxide (titanium white), zinc white, rouge, chrome yellow, Prussian blue, and cadmium red; organic pigments such as azo pigments, lake pigments, anthraquinone pigments, phthalocyanine pigments, isoindolinone pigments, and dioxazine pigments; and mixtures thereof.

The average particle size of the pigment is preferably in the range of 50 nm or more and 5 µm or less, and more preferably in the range of 100 nm or more and 1 µm or less. This average particle size corresponds to the median diameter (D50) described later for the particles of the surface protective layer 5.

The mass of the pigment is preferably in the range of 2 parts by mass or more and 50 parts by mass or less, and more preferably in the range of 5 parts by mass or more and 30 parts by mass or less, relative to 100 parts by mass of the binder resin.

Examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

In order to impart various functions, functional additives, such as plasticizers dispersants, surfactants, tackifiers, adhesive aids, drying agents, curing agents, curing accelerators, and curing retarders, may be added to the ink.

The ink used for forming the pigment-containing layer 3 can contain a binder resin in various forms. For example, the ink may be a solvent-free ink. Alternatively, the ink may contain a binder resin in the form of a solution, emulsion, or dispersion. According to an example, the ink contains a binder resin in the form of an aqueous emulsion or dispersion. Alternatively, the ink may be an ink cured as a result of evaporation of the solvent, or an ink cured as a result of irradiation with ionizing radiation, or an ink cured as a result of heating.

### <1.3> Primer layer

The primer layer 4 is provided on the pigment-containing layer 3. The primer layer 4 covers one entire surface of the primary film layer 2 via the pigment-containing layer 3.

The primer layer 4 contains only a cured product of a first ionizing radiation curable resin as a cured resin. According to an example, the primer layer 4 is substantially composed of a cured product of a first ionizing radiation curable resin, or substantially composed of a cured product of a mixture of a first ionizing radiation curable resin and a filler. The term ionizing radiation may refer to charged particle beams such as electron beams. The first ionizing radiation curable resin is cured by ionizing radiation irradiation. The first ionizing radiation curable resin can also be cured by UV light irradiation.

The expression "the primer layer is substantially composed of a cured product of a first ionizing radiation curable resin" refers to the primer layer being composed of only a cured product of a first ionizing radiation curable resin, or composed of only a cured product of a mixture of a first ionizing radiation curable resin and an additive dissolved in this resin. The expression "the primer layer is substantially composed of a cured product of a mixture of a first ionizing radiation curable resin and a filler" refers to the primer layer being composed of only a cured product of a mixture of a first ionizing radiation curable resin and a filler, or composed of only a cured product of a mixture of a first ionizing radiation curable resin, an additive dissolved in this resin, and a filler.

As mentioned above, the pigment-containing layer 3 can function as a concealing layer that conceals the substrate B or the primary film layer 2. Therefore, the proportion of the pigment in the pigment-containing layer 3 is relatively large. In other words, the total area of the interfaces between the pigment and the resin is large in the pigment-containing layer 3. Since the proportion is large, when forming the pigment-containing layer 3, a binder resin producing a cured product having high polarity and a low crosslinking degree is used so that the pigment is sufficiently dispersed.

The primer layer 4 is provided between the pigment-containing layer 3 and the surface protective layer 5, transparent to visible light, and preferably colorless and transparent. The primer layer 4 is not a layer containing a high content of particles. Therefore, the primer layer 4 does not have interfaces on the inside, or if it does, the total area of the interfaces is small. Even if the primer layer 4 contains a filler, the filler can be sufficiently dispersed in the first ionizing radiation curable resin due to the low content of particles.

The first ionizing radiation curable resin is a first mixture of an acrylate resin and a methacrylate resin.

The methacrylate is preferably a monofunctional, difunctional, or trifunctional methacrylate. The methacrylate may be any of a monofunctional methacrylate, difunctional methacrylate, and trifunctional methacrylate, or a combination of two or more of these methacrylates.

Use of a methacrylate having a large number of functional groups can increase the crosslinking degree and improve scratch resistance compared to the case of using a methacrylate having a smaller number of functional groups. However, use of a methacrylate having an excessively large number of functional groups may increase the speed of the crosslinking reaction as a result of irradiation of ionizing radiation or UV light, thereby narrowing the process window that enables achievement of high adhesion between the primer layer 4 and the surface protective layer 5.

In the first ionizing radiation curable resin, the proportion of the molar quantity of methacryloyl groups relative to the sum of the molar quantity of acryloyl groups and the molar quantity of methacryloyl groups is preferably in the range of 3% or more and 50% or less, and more preferably in the range of 5% or more and 40% or less.

A methacrylate can partially cure a first coating film containing the first ionizing radiation curable resin as a result of irradiation of ionizing radiation or UV light. Increase of the proportion can broaden the process window that enables achievement of high adhesion between the primer layer 4 and the surface protective layer 5. However, excessive increase of the proportion may deteriorate scratch resistance of the decorative sheet 1.

As will be described later, additives to be added to the first ionizing radiation curable resin are for enhancing functionality of the final product, and may include, for example, at least one of antibacterial agents, antifungal agents, UV absorbers, and photostabilizers. The total mass of the additives is preferably 15 parts by mass or less, and more preferably 10 parts by mass or less, relative to 100 parts by mass of the first ionizing radiation curable resin.

The filler comprises an inorganic compound such as an inorganic oxide. Examples of the inorganic compound include silica, alumina, magnesia, titanium oxide, and barium sulfate.

The average particle size of the filler is preferably 10 µm or less, and more preferably 8 µm or less. The average particle size of the filler is preferably 2 µm or more, and more preferably 5 µm or more. This average particle size corresponds to the median diameter (D50) described later for the particles of the surface protective layer 5.

The mass of the filler relative to 100 parts by mass of the first ionizing radiation curable resin is smaller than the mass of the pigment relative to 100 parts by mass of the binder resin. The mass of the filler is preferably 10 parts by mass or less, and more preferably 8 parts by mass or less, relative to 100 parts by mass of the first ionizing radiation curable resin. The primer layer 4 does not necessarily have to contain particles a filler, etc.

The thickness of the primer layer 4 is preferably in the range of 0.5 µm or more and 10 µm or less, more preferably in the range of 1 µm or more and 8 µm or less, and even more preferably in the range of 1.5 µm or more and 6 µm or less. A primer layer 4 with a reduced thickness may deteriorate scratch resistance. A primer layer 4 with an increased thickness may deteriorate processability of the decorative sheet 1 and may easily cause blushing when bent.

### <1.4> Surface protective layer

The surface protective layer 5 is provided on the primer layer 4. In this example, the surface protective layer 5 covers the entire upper surface of the primer layer 4.

The surface protective layer 5 preferably has a specular gloss GS (60°) of 20 or less, more preferably 18 or less, and even more preferably 15 or less. According to an example, the specular gloss GS (60°) of the surface protective layer 5 is 0.5 or more. The specular gloss GS (60°) refers to a specular gloss measured at an incidence angle of 60 degrees using a gloss meter conforming to ISO 2813. The specular gloss GS (60°) may sometimes be expressed by adding % after the numerical value; however, % is omitted in this example.

The surface protective layer 5 has a surface provided with an uneven structure. The uneven structure provided to the upper surface of the surface protective layer 5 has a function of reducing the specular gloss GS (60°) of the surface protective layer 5.

In this example, the surface of the surface protective layer 5 is provided with an uneven structure including multiple ridge portions each protruding in a ridge shape. Specifically, as shown in Figs. 2 and 4, the surface protective layer 5 includes a core portion 5A that is a thin layer having a flat upper surface, and multiple ridge portions 5B each protruding in a ridge shape from the upper surface of the core 5A.

In the present disclosure, the ridge portions 5B refer to, for example, the portions from the lowest parts to the tips of the convexities provided on the surface of the surface protection layer 5, and the core portion 5A refers to the portion of the surface protective layer 5 excluding the ridge portions 5B. The ridge shape refers to a linearly extending convexity in plan view.

The ridge portions 5B may be curved or straight in plan view, but are preferably curved as shown in Fig. 3 from the perspective of fingerprint resistance on the surface of the decorative sheet 1. As will be described later, the surface protective layer 5 having the ridge portions 5B can be formed, for example, by applying light of a specific wavelength to the surface of a coating film containing a second ionizing radiation curable resin, and expanding the cured film formed on the surface of the coating film in the in-plane direction.

The uneven structure on the upper surface of the surface protective layer 5 preferably has a ratio RSm/Ra in the range of 10 or more and 800 or less, and more preferably in the range of 10 or more and 700 or less, between an average length RSm of roughness curve elements and an arithmetic mean roughness Ra. Even more preferably, the ratio RSm/Ra is in the range of 10 or more and 400 or less, and still more preferably in the range of 50 or more and 350 or less. The smaller the ratio RSm/Ra, the smaller the pitch of the convexities. Consequently, the contamination attached to the surface of the decorative sheet 1 becomes difficult to wipe off, deteriorating stain resistance. The larger the ratio RSm/Ra, the larger the pitch of the convexities, and the effect of the uneven structure to reduce the specular gloss GS (60°) of the surface protective layer 5 becomes smaller.

The ratio RSm/Ra is preferably 80 or more. The larger the ratio RSm/Ra, the larger the pitch of the convexities, and the affinity of water or a cleaning agent (water containing a surfactant or alcohol) to the upper surface of the surface protective layer 5 is improved accordingly. As long as the decorative sheet 1 includes a surface protective layer 5 having such a surface texture, contamination can be easily wiped off using water or a cleaning agent even when the surface becomes contaminated.

The ratio RSm/Ra is most preferably 100 or more. If the ratio RSm/Ra is in this range, commonly available cleaning sponges can be brought into contact with the boundaries between the convexities and the regions in the vicinities thereof on the upper surface of the surface protective layer 5. Therefore, even if the surface of the decorative sheet 1 becomes contaminated, the contamination can be easily wiped off using commonly available cleaning sponges.

The arithmetic mean roughness Ra and the average length RSm of roughness curve elements are values of measurement using a line roughness gauge (according to JIS B 0601:2013).

The arithmetic mean roughness Ra is preferably in the range of 0.2 µm or more and 10.0 µm or less, more preferably in the range of 0.5 µm or more and 5.0 µm or less, and even more preferably in the range of 0.8 µm or more and 4.0 µm or less.

The average length RSm of roughness curve elements is preferably in the range of 50 µm or more and 800 µm or less, more preferably in the range of 80 µm or more and 600 µm or less, and even more preferably in the range of 100 µm or more and 500 µm or less.

The upper surface of the surface protective layer 5 may have a sinusoidal shape in a cross section parallel to the thickness direction and the arrangement direction of the ridge portions 5B. The sinusoidal shape refers to a shape, as shown in Fig. 4, in which the line from the lowest point C of the ridge portions 5B to the highest point D (apex) can be expressed as a sine wave.

The thickness of the surface protective layer 5 is preferably in the range of 2 µm or more and 20 µm or less, more preferably in the range of 3 µm or more and 20 µm or less, even more preferably in the range of 5 µm or more and 15 µm or less, and most preferably in the range of 5 µm or more and 12 µm or less. A surface protective layer 5 with a small thickness may make it difficult to achieve the surface texture described above using the method described below referring to the ratio RSm/Ra, etc. A surface protective layer 5 with a large thickness may deteriorate processability of the decorative sheet 1 and may easily cause blushing when bent.

The thickness of the surface protective layer 5 corresponds to the thickness of a layer having an apparent area and volume equal to those of the surface protective layer 5 and having a flat surface. The thickness of the surface protective layer 5 can be calculated, for example, using the following method. First, an image of a cross section of the surface protective layer 5 is captured, which is taken along the direction parallel to the thickness direction and perpendicular to the length direction of the ridge portions 5B. Next, the dimension of the surface protective layer 5 in the width direction of the ridge portions 5B and the area of the cross section of the surface protective layer 5 are calculated from the image of the cross section. The thickness of the surface protective layer 5 is obtained by dividing the area by this dimension. If the surface protective layer-forming coating liquid described later does not contain a solvent, the thickness of the coating film formed of this coating liquid may be equal to the thickness of the surface protective layer 5.

In the thickness of the surface protective layer 5, the ratio between the thickness (or height) of the ridge portions 5B and the thickness of the core portion 5A (Thickness of ridge portions 5B / Thickness of core portion 5A) is preferably set so as to be in the range of 0.01 or more and 2.0 or less, and more preferably in the range of 0.1 or more and 1.0 or less.

The surface protective layer 5 contains a cured resin. As will be described later, the surface protective layer 5 can further contain particles. If the mass of the surface protective layer 5 is 100 parts by mass, the mass of the cured resin contained in the surface protective layer 5 is preferably 60 parts by mass or more, more preferably 70 parts by mass or more, and even more preferably 80 parts by mass or more.

The surface protective layer 5 contains only the cured product of the second ionizing radiation curable resin as a cured resin. As mentioned above, the ionizing radiation may refer to charged particle beams such as electron beams. The second ionizing radiation curable resin can be cured by ionizing radiation irradiation. The second ionizing radiation curable resin can also be cured by UV light irradiation. The second ionizing radiation curable resin used in this example can be cured by irradiation with light having a wavelength of 200 nm or less, while having a large absorption coefficient for this light.

As the second ionizing radiation curable resin, known resins, such as various monomers and commercially available oligomers, can be used, examples of which include (meth)acrylic resins, silicone-based resins, polyester-based resins, urethane-based resins, amide-based resins, and epoxy-based resins. The second ionizing radiation curable resin may be either an aqueous resin or non-aqueous (organic solvent-based) resin. The second ionizing radiation curable resin may be a solvent-free resin.

The second ionizing radiation curable resin preferably contains an acrylate as a main component. The term main component refers to the material being contained preferably at 60 parts by mass or more, more preferably 70 parts by mass or more, and most preferably 80 parts by mass or more, relative to 100 parts by mass of the resin composition.

The acrylate is preferably a bifunctional or higher acrylate, and more preferably a trifunctional or higher acrylate. From the perspective of obtaining a surface protective layer 5 having excellent scratch resistance, the acrylate is preferably a trifunctional or higher acrylate. There is no upper limit to the number of functional groups of the acrylate, but for example, it may be six or less.

The acrylate preferably contains a repeating structure. For example, the repeating structure may be any of an ethylene oxide (EO) structure, propylene oxide (PO) structure, and ε-caprolactone (CL) structure. It is preferable that the repeating structure is an ethylene oxide or propylene oxide structure. In the acrylate, the repeating structure can be present between the acryloyl group and the methylol group in an open ring state.

The number of repeat units of the repeating structure is preferably three or more. If an acrylate with a large number of repeat units is used, the cured film is likely to expand in the in-plane direction of the cured film in the second irradiation step described later, and therefore wrinkles corresponding to the ridge portions 5B are more likely to appear on the surface of the coating film. However, if the number of repeat units is excessively large, the crosslink density may be lowered and the scratch resistance of the surface protective layer may be deteriorated. Accordingly, the number of repeat units is preferably 30 or less, and more preferably 20 or less.

The number of repeat units of the repeating structure can be analyzed using an MALDI-TOF-MS analysis. The ionizing radiation curable resin may have a molecular weight distribution. If there is a molecular weight distribution, the number of repeat units is taken to be the number of repeat units corresponding to the molecular weight having the most intense peak in the MALDI-TOF-MS mass spectrum.

If the second ionizing radiation curable resin contains an acrylate, it may further contain a methacrylate. For example, the second ionizing radiation curable resin may be a second mixture of an acrylate and a methacrylate, in which the proportion of the molar quantity of methacryloyl groups relative to the sum of the molar quantity of acryloyl groups and the molar quantity of methacryloyl groups is smaller than in the first mixture. This proportion in the second mixture is preferably 90% or less, and more preferably 80% or less the proportion in the first mixture.

The surface protective layer 5 can further contain particles in addition to the cured resin.

Examples of the particles contained in the surface protective layer 5 include particles of organic materials such as polyethylene (PE) wax, polypropylene (PP) wax, and resin beads, and particles of inorganic materials such as silica, glass, alumina, titania, zirconia, calcium carbonate, and barium sulfate.

The average particle size (D50) is preferably 10 µm or less, more preferably in the range of 1 µm or more and 8 µm or less, even more preferably in the range of 2 µm or more and 7 µm or less, and most preferably in the range of 3 µm or more and 6 µm or less. If the average particle size (D50) is increased, particles are likely to shed from the surface protective layer 5, and it may become difficult to achieve high scratch resistance. If particles with a small size are used, the effect of uniformly producing wrinkles may be reduced.

The average particle size or the average particle size (D50) refers to a median diameter (D50) measured using a laser diffraction/scattering particle size distribution analyzer. If the surface protective layer-forming coating liquid contains particles, the surface protective layer 5 obtained from this coating liquid also contains particles. In order to obtain the average particle size of the particles contained in the surface protective layer 5, the diameters of a plurality of particles are actually measured, while observing a cross section of the layer, and the measured diameters are averaged. The value obtained in this way is substantially the same as the median diameter (D50) measured using a laser diffraction/scattering particle size distribution analyzer. Therefore, the above range of the average particle size can also be interpreted as the range of the average particle size of the particles contained in the second gloss adjustment layer.

The mass of the particles in the surface protective layer 5 is preferably in the range of 0.5 parts by mass or more and 10 parts by mass or less, more preferably in the range of 2 parts by mass or more and 8 parts by mass or less, and even more preferably in the range of 2 parts by mass or more and 6 parts by mass or less, relative to 100 parts by mass of the cured resin.

If the addition amount of the particles is in the above range, an especially high effect of uniformly producing wrinkles can be expected. If the addition amount of the particles is excessively large, particles are likely to shed from the surface protective layer 5, and it may become difficult to achieve high scratch resistance.

### <2> Method of producing decorative sheet

For example, the decorative sheet 1 can be produced using the following method.

First, a pigment-containing layer 3 containing a pigment and a binder resin is formed on one surface of a primary film layer 2 containing paper. The pigment-containing layer 3 can be formed, for example, using various printing methods such as gravure printing, offset printing, screen printing, electrostatic printing, and inkjet printing, and various coating methods such as roll coating, knife coating, microgravure coating, and die coating.

Next, a first coating film containing only the first ionizing radiation curable resin as a resin is formed on the pigment-containing layer 3. According to an example, a first coating film substantially composed of the first ionizing radiation curable resin is formed on the pigment-containing layer 3. In this case, the first coating film is formed so as to cover the entire upper surface of the pigment-containing layer 3.

The expression "the first coating film is substantially composed of the first ionizing radiation curable resin" refers to the first coating film being composed of only the first ionizing radiation curable resin, or composed of only a mixture of the first ionizing radiation curable resin and any additive dissolved in this resin. The expression "the first coating film is substantially composed of the first ionizing radiation curable resin and a filler" refers to the first coating film being composed of only a mixture of the first ionizing radiation curable resin and a filler, or composed of only a mixture of the first ionizing radiation curable resin, an additive dissolved in this resin, and a filler.

The first coating film is formed by applying a primer layer-forming coating liquid to the pigment-containing layer 3. The first coating film can be formed, for example, using various printing methods such as gravure printing, offset printing, screen printing, electrostatic printing, and inkjet printing, and various coating methods such as roll coating, knife coating, microgravure coating, and die coating.

The primer layer-forming coating liquid contains the first ionizing radiation curable resin mentioned above. As mentioned above, the first ionizing radiation curable resin is a first mixture of an acrylate resin and a methacrylate resin.

The primer layer-forming coating liquid can further contain the filler mentioned above. The primer layer-forming coating liquid can further contain other components, e.g., a solvent and at least one of additives, such as antibacterial agents and antifungal agents, for improving the functionality of the final product. The primer layer-forming coating liquid can further contain other additives such as UV absorbers and photostabilizers. As the UV absorbers, for example, benzotriazole-based, benzoate-based, benzophenone-based, and triazine-based UV absorbers can be used. As the photostabilizers, for example, hindered amine-based photostabilizers can be used. If the primer layer-forming coating liquid contains a solvent, the first coating film described above is obtained by applying this coating liquid and drying the coating film.

If the first coating film is fully cured by UV light irradiation in the third irradiation step described later, it is preferable that the primer layer-forming coating liquid further contains a photoinitiator. Examples of the photoinitiator include, although not particularly limited, benzophenone-based, acetophenone-based, benzoin ether-based, and thioxanthone-based photoinitiators.

Next, a first irradiation step is performed. In the first irradiation step, the first coating film is irradiated with first radiation to partially cure the first coating film. The term partially cured means that the coating film is in a solid state, but still contains a sufficient amount of C=C bonds derived from the acryloyl groups and methacryloyl groups.

The first radiation is ionizing radiation, for example. As mentioned above, the ionizing radiation refers to charged particle beams such as electron beams. The first radiation may be UV light for which the first ionizing radiation curable resin exhibits a small absorption coefficient. The UV light applied to the first coating film preferably has a wavelength exceeding 200 nm, more preferably in the range of 230 nm or more and 450 nm or less, and even more preferably in the range of 250 nm or more and 400 nm or less.

By applying ionizing radiation or the above UV light to the first coating film, curing can be promoted substantially uniformly throughout the thickness of the first coating film. Therefore, unlike the second coating film described later, the partially cured first coating film has no convexities on the surface.

The first coating film is preferably irradiated with the first radiation in such a way that the unreacted rate of the first coating film, i.e., the ratio of the number of C=C bonds after irradiation of the first radiation to the number of C=C bonds before irradiation of the first radiation, will be in the range of 5% or more and 80% or less, more preferably in the range of 10% or more and 60% or less, and even more preferably in the range of 15% or more and 50% or less.

The first coating film is preferably irradiated with the first radiation in such a way that the integrated irradiation quantity relative to the minimum integrated irradiation quantity required for fully curing the first coating film will be in the range of 3% or more and 30% or less, more preferably in the range of 5% or more and 25% or less, and even more preferably in the range of 8% or more and 20% or less.

According to an example, the minimum integrated irradiation quantity required for fully curing the first coating film is in the range of 10 mJ/cm² or more and 1,000 mJ/cm² or less.

The first coating film is preferably irradiated with the first radiation in such a way that the absorbed dose relative to the minimum absorbed dose required for fully curing the first coating film will be in the range of 0.2% or more and 50% or less, more preferably in the range of 0.5% or more and 40% or less, and even more preferably in the range of 1% or more and 30% or less.

According to an example, the minimum absorbed dose required for fully curing the first coating film is in the range of 5 kGy or more and 200 kGy or less.

As mentioned above, the first ionizing radiation curable resin further contains a methacrylate in addition to an acrylate. The methacrylate reduces the speed of crosslinking reaction as a result of the first radiation irradiation so that the process window enabling achievement of a desired cured state is broadened.

Next, a second coating film made of a surface protective layer-forming coating liquid is formed on the partially cured first coating film. In this case, the second coating film is formed so as to cover the entire upper surface of the first coating film.

The second coating film can be formed, for example, using various printing methods such as gravure printing, offset printing, screen printing, electrostatic printing, and inkjet printing, and various coating methods such as roll coating, knife coating, microgravure coating, and die coating.

The surface protective layer-forming coating liquid contains the second ionizing radiation curable resin mentioned above. As mentioned above, according to an example, the second ionizing radiation curable resin is an acrylate. According to another example, the second ionizing radiation curable resin is a second mixture of an acrylate and a methacrylate, in which the proportion of the molar quantity of methacryloyl groups relative to the sum of the molar quantity of acryloyl groups and the molar quantity of methacryloyl groups is smaller than in the first mixture.

The surface protective layer-forming coating liquid can further contain other components, e.g., the above particles, a solvent, and at least one of additives, such as antibacterial agents and antifungal agents, for improving the functionality of the final product. The surface protective layer-forming coating liquid can further contain other additives such as UV absorbers and photostabilizers. As the UV absorbers, for example, benzotriazole-based, benzoate-based, benzophenone-based, and triazine-based UV absorbers can be used. As the photostabilizers, for example, hindered amine-based photostabilizers can be used.

Next, ionizing radiation or UV light is applied to the first and second coating films to cure them fully. For example, the second and third irradiation steps described below are sequentially performed.

In the second step, the second coating film is irradiated with second radiation. The second radiation is light having a wavelength of 200 nm or less.

The second ionizing radiation curable resin contained in the surface protective layer-forming coating liquid has a large absorption coefficient for the second radiation. For this reason, the second radiation incident on the second coating film can only reach the depth of several tens to several hundreds of nm from the outermost surface of the film. Therefore, in the second irradiation step, the crosslinking reaction proceeds in the surface region of the second coating film to form an extremely thin cured film, while in other regions, crosslinking reaction does not proceed and the coating film in the regions remains uncured.

The second coating film that has undergone the second irradiation step has wrinkles on the surface corresponding to the ridge portions 5B. The present inventors consider the reason why the wrinkles appear on the surface of the coating film due to the second irradiation step to be as follows.

As described above, the second radiation can only reach the depth of several tens to several hundreds of nm from the outermost surface of the second coating film. Specifically, the crosslinking reaction of the second ionizing radiation curable resin occurs only in the surface region of the second coating film, and the regions several tens to several hundreds of nm from the outermost surface remain uncured, where molecules with high fluidity may be present. Such highly fluid molecules may swell the cured film, increasing the volume of the cured film. The cured film may buckle due to the in-plane compressive stress caused by volume increase in the in-plane direction, whereby wrinkles may appear on the surface of the second coating film.

The second radiation does not reach portions of the first coating film covered by the second coating film. Accordingly, no crosslinking reaction occurs in these portions as a result of the second radiation irradiation.

The second radiation can be extracted from excimer VUV (vacuum ultra violet) light. The excimer VUV light can be produced from a lamp that uses a noble gas or a noble gas halide compound. When electrons having high energy are externally applied to a lamp in which a noble gas or a gas of a noble gas halide compound is sealed, a large quantity of discharge plasma (dielectric barrier discharge) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The wavelength (center wavelength) of light emitted from the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy or the difference between the wavelength and the binding energy of the organics, the light source to be used is preferably a xenon lamp emitting excimer light with a center wavelength of 172 nm. Also, considering the cost of maintaining the equipment, availability of materials, etc., a xenon lamp is preferably used as a light source.

The second irradiation step is performed under an atmosphere in which the oxygen concentration is low. Oxygen has a large absorption coefficient for light of 200 nm or less. Accordingly, for example, the second irradiation step may be preferably performed under a nitrogen gas atmosphere. The oxygen concentration in the gas phase in the second irradiation step, i.e., the residual oxygen concentration in the reaction atmosphere, is preferably 2,000 ppm or less, and more preferably 1,000 ppm or less.

Oxygen in the atmosphere inhibits radical polymerization. Therefore, the residual oxygen concentration in the reaction atmosphere affects the formation of wrinkles on the surface of the second coating film. Therefore, if the residual oxygen concentration in the reaction atmosphere is changed, the surface texture of the surface protective layer 5 may also change.

The integrated irradiation quantity of the second radiation is preferably in the range of 0.5 mJ/cm² or more and 200 mJ/cm² or less, more preferably in the range of 1 mJ/cm² or more and 100 mJ/cm² or less, even more preferably in the range of 3 mJ/cm² or more and 50 mJ/cm² or less, and most preferably in the range of 5 mJ/cm² or more and 30 mJ/cm² or less. If the integrated irradiation quantity is reduced, expansion of the cured film in the in-plane direction may be reduced. If the integrated irradiation quantity is excessively increased, the surface texture of the second coating film may be deteriorated.

In the third irradiation step, the second coating film is irradiated with third radiation. The third radiation is ionizing radiation or UV light having a longer wavelength compared to that of the light applied in the second irradiation step. The third radiation may utilize that described above for the first radiation.

In the third irradiation step, a crosslinking reaction proceeds in the first and second coating films throughout the thicknesses of the films. Since the first coating film has already been partially cured when starting the third irradiation step, a crosslinking reaction may also occur between the molecules contained in the first coating film and the molecules contained in the second coating film in portions where the first and second coating films contact with each other. Accordingly, high adhesion can be achieved between the primer layer 4 and the surface protective layer 5.

The integrated irradiation quantity of the third radiation is preferably in the range of 10 mJ/cm² or more and 500 mJ/cm² or less, more preferably in the range of 50 mJ/cm² or more and 400 mJ/cm² or less, and even more preferably in the range of 100 mJ/cm² or more and 300 mJ/cm² or less.

Irradiation of the third radiation is preferably performed in such a way that the absorbed dose will be in the range of 5 kGy or more and 200 kGy or less, more preferably in the range of 10 kGy or more and 150 kGy or less, and even more preferably in the range of 15 kGy or more and 100 kGy or less.

In the third irradiation step, if it is difficult to obtain a sufficiently strong layer with irradiation of only one type of radiation, the type of the third radiation may be changed during the irradiation. For example, ionizing radiation may be applied first, and then UV light having a longer wavelength than that of the light applied in the second irradiation step may be applied. Alternatively, UV light having a longer wavelength than that of the light applied in the second irradiation step may be applied first, and then ionizing radiation may be applied. Alternatively, UV light having a longer wavelength than that of the light applied in the second irradiation step may be applied first, and then UV light having an even longer wavelength may be applied.

In this way, a decorative sheet 1 is obtained. In the decorative sheet 1 obtained using the above method, the core portion 5A and the ridge portions 5B are integrally formed with no interface therebetween.

### <3> Effects

The configuration described above for the decorative sheet 1 can suppress occurrence of stains or traces of stains caused by water absorption. This will be described below.

As mentioned above, the pigment-containing layer 3 has a large total area of interfaces between the pigment and the binder resin. When forming the pigment-containing layer 3, a binder resin producing a cured product having high polarity and a low crosslinking degree is used. Therefore, the pigment-containing layer 3 has high water permeability. Accordingly, when water attached to the surface protective layer 5 reaches the pigment-containing layer 3, the water permeates the pigment-containing layer 3 and is absorbed by the paper contained in the primary film layer 2. The water-absorbed portions may be visible as stains. These water-absorbed portions, in which the paper shrinks in the drying process, may still be visible as traces of water absorption even after drying.

The surface protective layer 5 can impart some degree of water resistance to the decorative sheet 1. However, the thickness of the surface protective layer 5 is uneven due to having the uneven structure on the surface as described above. Therefore, in order to achieve high water resistance with the surface protective layer 5 alone, the minimum thickness thereof is required to be sufficiently increased . However, since the thickness of the second coating film can affect the surface texture of the surface protective layer 5, the thickness of the surface protective layer 5 cannot be determined considering only water resistance.

As described above, the resin contained in the primer layer 4, which is a cured product of an ionizing radiation curable resin, has a higher crosslinking degree compared to the cured resin contained in the pigment-containing layer 3. The primer layer 4 does not have interfaces on the inside, or if it does, the total area of the interfaces is small. Accordingly, the primer layer 4 greatly contributes to improving water resistance. The primer layer 4 does not contribute to formation of the uneven structure.

Therefore, by combining the primer layer 4, which is substantially made of the cured product of an ionizing radiation curable resin, with the surface protective layer 5, high water resistance can be achieved, thereby preventing occurrence of stains or traces of stains caused by water absorption of paper.

In the decorative sheet 1, the primer layer 4 contains a cured product of the first ionizing radiation curable resin, and the first ionizing radiation curable resin is the first mixture of an acrylate and a methacrylate. The acrylate contributes to improving scratch resistance, and the methacrylate contributes to improving adhesion between the primer layer 4 and the surface protective layer 5. Therefore, the decorative sheet 1 has excellent scratch resistance and excellent adhesion between the gloss adjustment layers.

In the decorative sheet 1, the surface protective layer has a surface provided with an uneven structure. The uneven structure preferably has the ratio RSm/Ra, between the average length RSm of roughness curve elements and the arithmetic mean roughness Ra, in the above range. Such an uneven structure can achieve a low gloss.

The uneven structure containing the ridge portions 5B appearing on the upper surface of the surface protective layer 5, as a result of using the method described above, is finer compared to the uneven structure formed through mechanical processing such as embossing. The decorative sheet 1, in which such a fine uneven structure is provided on the upper surface of the surface protective layer 5, has a matte finish and excellent fingerprint resistance.

### Examples

Examples of the present invention will be described below. The term particle size described below refers to the average particle size (D50) described above.

### <Example 1>

The decorative sheet 1 described referring to Figs. 1 to 4 was prepared using the following method. First, impregnated paper having a basis weight of 50 g/m² (GFR-506, manufactured by Kohjin Co., Ltd.) was used as the primary film layer 2. Using an aqueous ink (manufactured by Toyo Ink Co., Ltd.), a pigment-containing layer 3 was formed on one surface of the primary film layer 2. The pigment contained in the ink used in this example had an average particle size of 500 nm.

Next, a primer layer-forming coating liquid having the following composition was applied to the pigment-containing layer 3. The primer layer-forming coating liquid was applied so that the primer layer 4 had a thickness of 5 µm.

### (Primer layer-forming coating liquid)

### Ionizing radiation curable resin R1

Type: Trimethylolpropane EO-modified triacrylate (3 moles of EO added)
Product name: Miramer M3130 (manufactured by Miwon)
Formulation: 50 parts by mass

### Ionizing radiation curable resin R2

Type: Methoxypolyethylene glycol (400) methacrylate
Product name: NK Ester M-90G (manufactured by Shin-Nakamura Chemical Co., Ltd.)
Formulation: 50 parts by mass

After that, a first irradiation step was performed. Specifically, electron beams as ionizing radiation were applied to a first coating film made of the primary layer-forming coating liquid so that the absorbed dose of the first coating film was 10 kGy. Thus, the first coating film was partially cured.

Subsequently, a surface protective layer-forming coating liquid having the following composition was printed on the first coating film. The surface protective layer-forming coating liquid was printed so that the surface protective layer 5 had a thickness of 5 µm.

### (Surface protective layer-forming coating liquid>

### Ionizing radiation curable resin

Type: Trimethylolpropane EO-modified triacrylate (6 moles of EO added)
Product name: Miramer M3160 (manufactured by Miwon)
Formulation: 100 parts by mass

### Particles

Product Name: SYLYSIA 250N (manufactured by Fuji Silysia Chemical Ltd.)
Particle size: 5 µm
Formulation: 0.5 parts by mass

Next, a second irradiation step was performed. Specifically, using an Xe excimer lamp, UV light having a wavelength of 172 nm was applied to the surface of a second coating film made of the surface protective layer-forming coating liquid so that the integrated irradiation quantity was 50 mJ/cm², in a nitrogen gas atmosphere at atmospheric pressure in which the oxygen concentration was 500 ppm. Thus, wrinkles were produced on the surface of the second coating film.

Subsequently, a third irradiation step was performed. Specifically, the first and second coating films were irradiated with 100 kGy of ionizing radiation and the entirety of the coating films was fully cured to thereby form a primer layer 4 and a surface protective layer 5.

In this way, a decorative sheet 1 was obtained.

### <Example 2>

A decorative sheet 1 described referring to Figs. 1 to 4 was prepared as in Example 1 except that the primer layer-forming coating liquid was formulated to contain 80 parts by mass of the ionizing radiation curable resin R1 and 20 parts by mass of the ionizing radiation curable resin R2.

### <Example 3>

A decorative sheet 1 described referring to Figs. 1 to 4 was prepared as in Example 1 except that the primer layer-forming coating liquid was formulated to contain 90 parts by mass of the ionizing radiation curable resin R1 and 10 parts by mass of the ionizing radiation curable resin R2.

### <Example 4>

A decorative sheet 1 described referring to Figs. 1 to 4 was prepared as in Example 1 except that the following resin was used as the ionizing radiation curable resin R2 and the primer layer-forming coating liquid was formulated to contain 90 parts by mass of the ionizing radiation curable resin R1 and 10 parts by mass of the ionizing radiation curable resin R2.

### Ionizing radiation curable resin R2

Type: Isobornyl methacrylate
Product name: LIGHT ESTER IB-X (manufactured by Kyoeisha Chemical Co., Ltd.)

### <Example 5>

A decorative sheet 1 described referring to Figs. 1 to 4 was prepared as in Example 1 except that the following resin was used as the ionizing radiation curable resin R2
Ionizing radiation curable resin R2
Type: EO-modified bisphenol A dimethacrylate (10 moles of EO added)
Product name: NK Ester BPE-500 (manufactured by Shin-Nakamura Chemical Co., Ltd.)

### <Example 6>

A decorative sheet 1 described referring to Figs. 1 to 4 was prepared as in Example 1 except that the following resin was used as the ionizing radiation curable resin R2 and the primer layer-forming coating liquid was formulated to contain 80 parts by mass of the ionizing radiation curable resin R1 and 20 parts by mass of the ionizing radiation curable resin R2.

### Ionizing radiation curable resin R2

Type: EO-modified bisphenol A dimethacrylate (10 moles of EO added)
Product name: NK Ester BPE-500 (manufactured by Shin-Nakamura Chemical Co., Ltd.)

### <Example 7>

A decorative sheet 1 described referring to Figs. 1 to 4 was prepared as in Example 1 except that the following resin was used as the ionizing radiation curable resin R2 and the primer layer-forming coating liquid was formulated to contain 90 parts by mass of the ionizing radiation curable resin R1 and 10 parts by mass of the ionizing radiation curable resin R2.

### Ionizing radiation curable resin R2

Type: EO-modified bisphenol A dimethacrylate (10 moles of EO added)
Product name: NK Ester BPE-500 (manufactured by Shin-Nakamura Chemical Co., Ltd.)

### <Example 8>

A decorative sheet 1 described referring to Figs. 1 to 4 was prepared as in Example 1 except that the following resin was used as the ionizing radiation curable resin R2 and the primer layer-forming coating liquid was formulated to contain 80 parts by mass of the ionizing radiation curable resin R1 and 20 parts by mass of the ionizing radiation curable resin R2.

### Ionizing radiation curable resin R2

Type: Polyethylene glycol (200) dimethacrylate
Product name: NK Ester 4G (manufactured by Shin-Nakamura Chemical Co., Ltd.)

### <Example 9>

A decorative sheet 1 described referring to Figs. 1 to 4 was prepared as in Example 1 except that the following resin was used as the ionizing radiation curable resin R2.

### Ionizing radiation curable resin R2

Type: Trimethylolpropane EO-modified trimethacrylate (3 moles of EO added)
Product name: NK Ester TMPT-3EO (manufactured by Shin-Nakamura Chemical Co., Ltd.)

### <Example 10>

A decorative sheet 1 described referring to Figs. 1 to 4 was prepared as in Example 1 except that the following resin was used as the ionizing radiation curable resin R2.

### Ionizing radiation curable resin R2

Type: Trimethylolpropane PO-modified trimethacrylate (3 moles of PO added)
Product name: NK Ester TMPT-3PO (manufactured by Shin-Nakamura Chemical Co., Ltd.)

### <Example 11>

A decorative sheet 1 described referring to Figs. 1 to 4 was prepared as in Example 1 except for the following points.

Specifically, in the present example, the following resin was used as the ionizing radiation curable resin in the surface protective layer-forming coating liquid.

### Ionizing radiation curable resin

Type: Trimethylolpropane EO-modified triacrylate (3 moles of EO added)
Product name: Miramer M3130 (manufactured by Miwon)

In the second irradiation step, using an Xe excimer lamp, UV light having a wavelength of 172 nm was applied to the surfaces of the first coating film and the second coating film made of the surface protective layer-forming coating liquid so that the integrated irradiation quantity was 100 mJ/cm², in a nitrogen gas atmosphere at atmospheric pressure in which the oxygen concentration was 200 ppm.

### <Example 12>

A decorative sheet 1 described referring to Figs. 1 to 4 was prepared as in Example 1 except that the following resin was used as an ionizing radiation curable resin in the surface protective layer-forming coating liquid.

### Ionizing radiation curable resin

Type: Trimethylolpropane EO-modified triacrylate (15 moles of EO added)
Product name: SR9035 (manufactured by Sartomer)

### <Example 13>

A decorative sheet 1 described referring to Figs. 1 to 4 was prepared as in Example 1 except that the following resin was used as an ionizing radiation curable resin in the surface protective layer-forming coating liquid.

### Ionizing radiation curable resin

Type: Ethylene glycol diacrylate (9 moles of EO added)
Product name: Light Acrylate 9EG-A (manufactured by Kyoeisha Chemical Co., Ltd.)

### <Example 14>

A decorative sheet 1 described referring to Figs. 1 to 4 was prepared as in Example 1 except for the following points.

Specifically, in the present example, the following resin was used as the ionizing radiation curable resin in the surface protective layer-forming coating liquid.

### Ionizing radiation curable resin

Type: Ethoxylated pentaerythritol tetraacrylate (35 moles of EO added)
Product name: NK Ester ATM-35E (manufactured by Shin-Nakamura Chemical Co., Ltd.)

In the second irradiation step, using an Xe excimer lamp, UV light having a wavelength of 172 nm was applied to the surfaces of the first coating film and the second coating film made of the surface protective layer-forming coating liquid so that the integrated irradiation quantity was 50 mJ/cm², in a nitrogen gas atmosphere at atmospheric pressure in which the oxygen concentration was 200 ppm.

### <Example 15>

A decorative sheet 1 described referring to Figs. 1 to 4 was prepared as in Example 1 except for the following points.

Specifically, in the present example, the following resin was used as the ionizing radiation curable resin in the surface protective layer-forming coating liquid.

### Ionizing radiation curable resin

Type: Ethoxylated dipentaerythritol hexaacrylate (12 moles of EO added)
Product name: NK Ester A-DPH-12E (manufactured by Shin-Nakamura Chemical Co., Ltd.)

In the second irradiation step, using an Xe excimer lamp, UV light having a wavelength of 172 nm was applied to the surfaces of the first coating film and the second coating film made of the surface protective layer-forming coating liquid so that the integrated irradiation quantity was 150 mJ/cm², in a nitrogen gas atmosphere at atmospheric pressure in which the oxygen concentration was 100 ppm.

### <Example 16>

A decorative sheet 1 described referring to Figs. 1 to 4 was prepared as in Example 1 except that the surface protective layer-forming coating liquid was printed so that the surface protective layer 5 had a thickness of 2 µm.

### <Example 17>

A decorative sheet 1 described referring to Figs. 1 to 4 was prepared as in Example 1 except that the surface protective layer-forming coating liquid was printed so that the surface protective layer 5 had a thickness of 20 µm.

### <Example 18>

A decorative sheet 1 described referring to Figs. 1 to 4 was prepared as in Example 1 except for the following points. Specifically, in the present example, particles were omitted from the surface protective layer-forming coating liquid. The surface protective layer-forming coating liquid was printed so that the surface protective layer 5 had a thickness of 3 µm.

### <Example 19>

A decorative sheet 1 described referring to Figs. 1 to 4 was prepared as in Example 1 except that the surface protective layer-forming coating liquid was formulated to contain 10 parts by mass of particles.

### <Example 20>

A decorative sheet 1 described referring to Figs. 1 to 4 was prepared as in Example 1 except that the following particles were added to the primer layer-forming coating liquid.

### Particles

Product Name: SYLYSIA 250N (manufactured by Fuji Silysia Chemical Ltd.)
Particle size: 5 µm
Formulation: 5 parts by mass

### <Example 21>

A decorative sheet 1 described referring to Figs. 1 to 4 was prepared as in Example 1 except for the following points.

Specifically, in the present example, the following resin was used as the ionizing radiation curable resin in the surface protective layer-forming coating liquid.

### Ionizing radiation curable resin

Type: Trimethylolpropane EO-modified triacrylate (6 moles of EO added)
Product name: Miramer M3160 (manufactured by Miwon)
Formulation: 60 parts by mass

### Ionizing radiation curable resin R4

Product name: Dipentaerythritol hexaacrylate
Formulation: 40 parts by mass

### Particles

Product Name: SYLYSIA 250N (manufactured by Fuji Silysia Chemical Ltd.)
Particle size: 5 µm
Formulation: 0.5 parts by mass

### <Example 22>

A decorative sheet 1 described referring to Figs. 1 to 4 was prepared as in Example 21 except for the following points.

Specifically, in the present example, the surface protective layer-forming coating liquid was formulated so that the contents of the ionizing radiation curable resins R3 and R4 were 40 parts by mass and 60 parts by mass, respectively.

### <Comparative Example 1>

A decorative sheet similar to the decorative sheet described referring to Figs. 1 to 4 was prepared as in Example 1 except that the second irradiation step was omitted.

### <Comparative Example 2>

A decorative sheet similar to the decorative sheet described referring to Figs. 1 to 4 was prepared as in Example 1 except that the ionizing radiation curable resin R2 was omitted from the primer layer-forming coating liquid.

### <Comparative Example 3>

A decorative sheet similar to the decorative sheet described referring to Figs. 1 to 4 was prepared as in Example 1 except that the ionizing radiation curable resin R1 was omitted from the primer layer-forming coating liquid.

### <Comparative Example 4>

A decorative sheet similar to the decorative sheet described referring to Figs. 1 to 4 was prepared as in Example 1 except that no primer layer 4 was formed.

### <Evaluation>

The above decorative sheets were evaluated as follows. The decorative sheets evaluated as AAA, AA or A were determined to be above the pass level because of having no problem in actual use.

### (1) Thickness of surface protective layer

The thickness of the surface protective layer was measured using a method similar to the method described above.

Specifically, the decorative sheet was embedded in a resin such as a cold-curing epoxy resin and a UV curable resin and the resin was sufficiently cured. Next, the resultant object was cut so that a cross section of the decorative sheet was visible, and mechanical polishing was performed to obtain a measurement surface.

Subsequently, an image of the surface protective layer in the cross section was captured using a scanning electron microscope SIGMA 500 manufactured by Carl Zeiss Microscopy GmbH. The image was captured under conditions of: acceleration voltage of 0.5 keV (low acceleration voltage), imaging mode of SE2 mode, and magnification of 2,000 times. No sputtering was performed on the sample to be measured.

Next, the dimension of the surface protective layer in the width direction of the ridge portions and the area of the surface protective layer in the cross section were calculated from the image of the cross section. The thickness of the surface protective layer was calculated by dividing this area by this dimension. The thickness obtained in this way was equal to the thickness of the coating film made of the surface protective layer-forming coating liquid.

The thickness of the primer layer was measured using a method similar to the method described above.

### (2) Gloss

As a gloss, a specular gloss GS (60°) was measured using the Rhopoint IQ-S (manufactured by Rhopoint Instruments). The 60-degree gloss in the following Tables 1 to 5 refers to this specular gloss GS (60°).

### (3) Adhesion

Adhesion of the surface protective layer to the primer layer was evaluated by performing a grid test specified in JIS K 5400 (abolished). In this case, cuts with a depth exceeding the interface between the primer layer and the surface protective layer were formed in a grid pattern at 1 mm intervals on the surface of the decorative sheet. Thus 100 squares were formed in a grid pattern. Next, an adhesive tape was applied to the surface of the decorative sheet, and then the adhesive tape was peeled off from the decorative sheet. Then, the number of the squares that remained on the decorative sheet was counted, for comparison with the following criteria to evaluate adhesion.
AAA: The number of remaining squares was 100.
AA: The number of remaining squares was in the range of 95 to 99.
A: The number of remaining squares was in the range of 90 to 94.
B: The number of remaining squares was 89 or less.

### (4) Scratch resistance

Each decorative sheet was attached to a wood substrate B using a urethane-based adhesive. After that, a steel wool rubbing test was performed to evaluate scratch resistance. Specifically, with a load of 100 g imposed, the decorative sheet was rubbed with steel wool for 20 strokes, and scratches and gloss changes caused on the surface of the decorative sheet were visually examined.

The evaluation criteria were as follows.
AAA: No scratches or gloss changes were observed on the surface.
AA: Slight scratches or gloss changes were observed on part of the surface.
A: Slight scratches or gloss changes were observed on the surface.
B: Significant scratches or gloss changes were observed on the surface.

### (5) Water resistance

Each decorative sheet was attached to a wood substrate B using a urethane-based adhesive. Each decorative sheet, with water dropped onto the surface protective layer, was covered with a watch glass and left to stand for 24 hours. After that, water was wiped off from the surface protective layer and the decorative sheet was observed.

The evaluation criteria were as follows.
AAA: Stains or traces of water absorption were not observed at all.
AA: Stains or traces of water absorption were observed in part but they were difficult to see.
A: Stains or traces of water absorption were observed in part and they were relatively easily found.
B: Traces of water absorption were clearly observed throughout the sheet.

Evaluation results are shown in Tables 1 to 5. In Tables 1 to 5, the proportion of the molar quantity of methacryloyl groups indicates the proportion of the molar quantity of methacryloyl groups relative to the sum of the molar quantity of acryloyl groups and the molar quantity of methacryloyl groups.

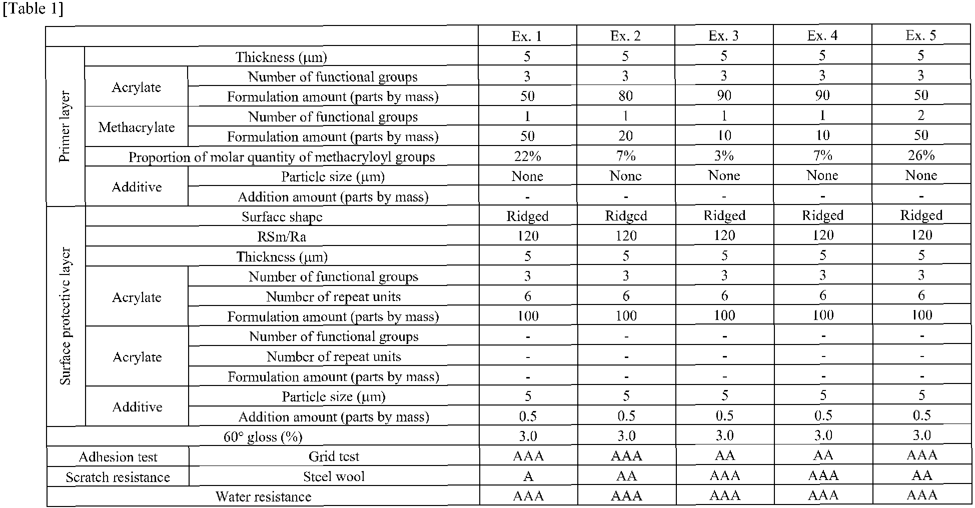

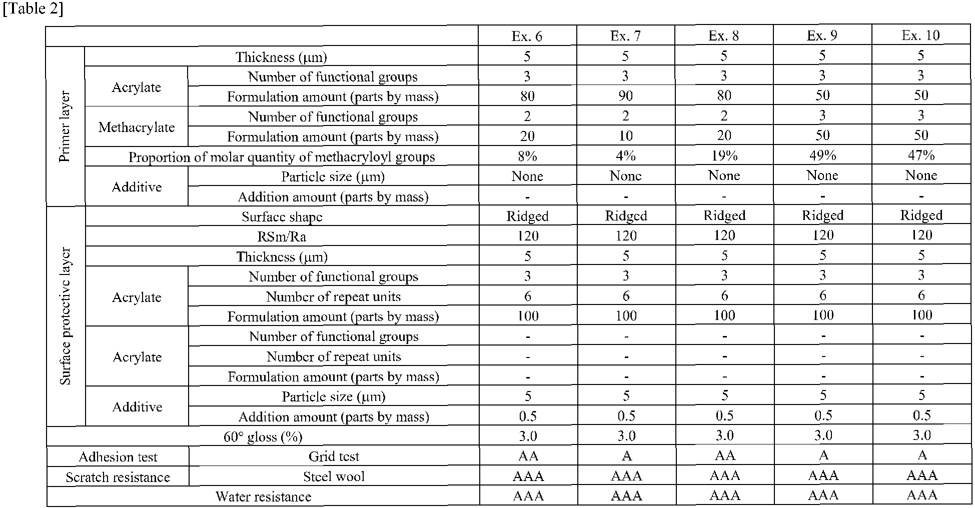

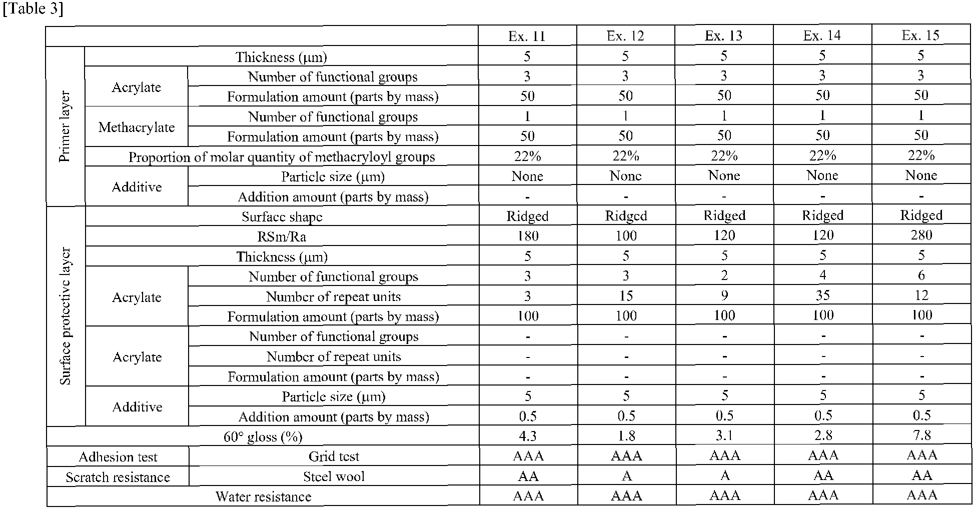

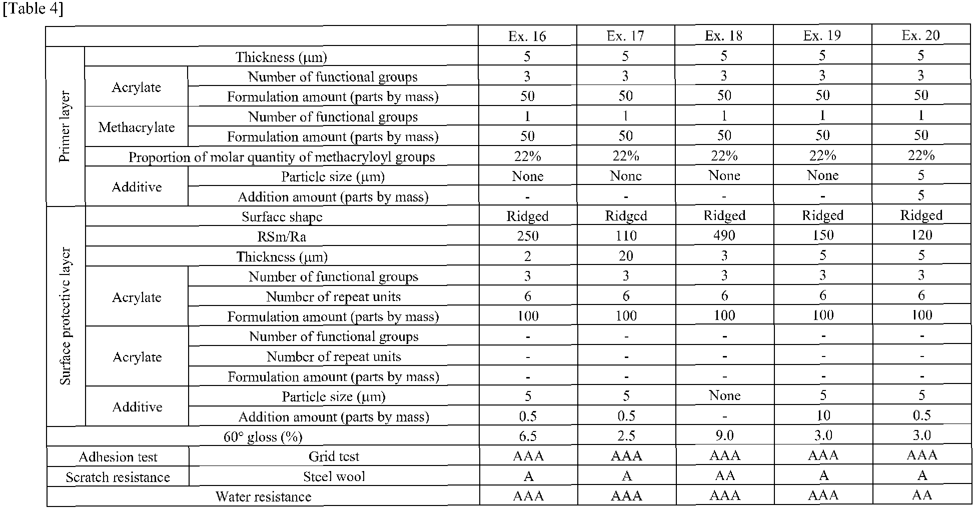

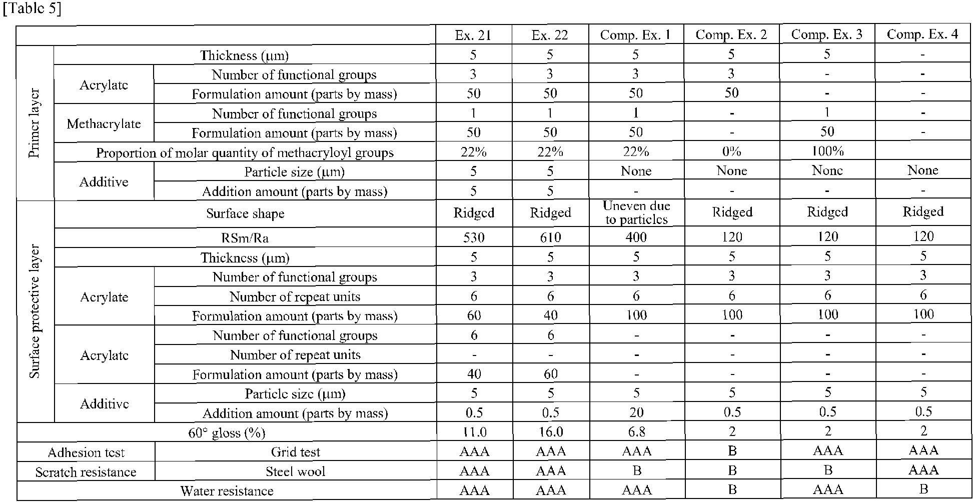

As shown in Tables 1 to 5, the decorative sheets of Examples 1 to 22 exhibited sufficient performance in all of adhesion, scratch resistance, and water resistance. In contrast, the sheet of Comparative Example 2 exhibited insufficient performance in all of adhesion, scratch resistance, and water resistance. The sheet of Comparative Example 4 exhibited sufficient performance in adhesion and scratch resistance, but exhibited insufficient performance in water resistance. The sheets of Comparative Examples 1 and 2 exhibited sufficient performance in adhesion and water resistance, but exhibited insufficient performance in scratch resistance.

### [Reference Signs List]

- 1: Decorative sheet
- 2: Primary film layer
- 3: Pigment-containing layer
- 4: Primer layer
- 5: Surface protective layer
- 5A: Core portion
- 5B: Ridge portion
- 11: Decorative material
- B: Substrate
- C: Point
- D: Point

## Claims

1. A decorative sheet, comprising
a primary film layer containing paper;
a pigment-containing layer provided on the primary film layer and containing a pigment and a binder resin;
a primer layer provided on the pigment-containing layer; and
a surface protective layer provided on the primer layer, wherein
the primer layer contains only a cured product of a first ionizing radiation curable resin as a cured resin, the first ionizing radiation curable resin being a first mixture of an acrylate and a methacrylate; and
the surface protective layer contains only a cured product of a second ionizing radiation curable resin as a cured resin and has a surface provided with an uneven structure including a plurality of ridge portions each protruding in a ridge shape.

2. The decorative sheet according to claim 1, wherein in the primer layer, a proportion of a molar quantity of methacryloyl groups relative to a sum of a molar quantity of acryloyl groups and a molar quantity of methacryloyl groups is in the range of 3% or more and 50% or less.

3. The decorative sheet according to claim 1 or 2, wherein the methacrylate is a monofunctional, difunctional, or trifunctional methacrylate.

4. The decorative sheet according to any one of claims 1 to 3, wherein when a mass of the first ionizing radiation curable resin is 100 parts by mass, a mass of a filler in the primer layer is 10 parts by mass or less.

5. The decorative sheet according to any one of claims 1 to 4, wherein the second ionizing radiation curable resin is an acrylate or a second mixture of an acrylate and a methacrylate, the second mixture having a proportion of a molar quantity of methacryloyl groups relative to a sum of a molar quantity of acryloyl groups and a molar quantity of methacryloyl groups which is smaller than that in the first mixture.

6. The decorative sheet according to any one of claims 1 to 5, wherein the second ionizing radiation curable resin contains a bifunctional or higher acrylate including a repeating structure.

7. The decorative sheet according to claim 6, wherein the number of repeat units of the repeating structure is 3 or greater.

8. The decorative sheet according to any one of claims 1 to 7, wherein the primer layer has a thickness in the range of 0.5 µm or more and 10 µm or less.

9. The decorative sheet according to any one of claims 1 to 8, wherein the surface protective layer has a thickness in the range of 2 µm or more and 20 µm or less.

10. The decorative sheet according to any one of claims 1 to 9, wherein the surface protection layer further contains particles having an average particle size of 10 µm or less.

11. The decorative sheet according to claim 10, wherein when a mass of the second ionizing radiation curable resin is 100 parts by mass, a mass of the particles is in the range of 0.5 parts by mass or more and 10 parts by mass or less.

12. The decorative sheet according to any one of claims 1 to 11, wherein the uneven structure has a ratio RSm/Ra in the range of 10 or more and 800 or less, the ratio RSm/Ra being a ratio between an average length RSm of roughness curve elements and an arithmetic mean roughness Ra.

13. The decorative sheet according to any one of claims 1 to 12, wherein the surface protective layer has a specular gloss GS (60°) of 20 or less.

14. A decorative material, comprising
the decorative sheet according to any one of claims 1 to 13; and
a substrate to which the decorative sheet is attached.

15. A method of producing a decorative sheet, comprising steps of
forming a pigment-containing layer containing a pigment and a binder resin on a primary film layer containing paper;
forming a first coating film on the pigment-containing layer, the first coating film containing only a first ionizing radiation curable resin as a resin, the first ionizing radiation curable resin being a first mixture of an acrylate and a methacrylate;
partially curing the first coating film by performing a first irradiation step of irradiating the first coating film with ionizing radiation or UV light;
forming a second coating film on the partially cured first coating film, the second coating film containing only a second ionizing radiation curable resin as a resin; and
irradiating the first coating film and the second coating film with ionizing radiation or UV light to fully cure the first coating film and the second coating film.

16. The method of producing a decorative sheet according to claim 15, wherein fully curing the first coating film and the second coating film comprises
a second irradiation step of irradiating the second coating film with light having a wavelength of 200 nm or less; and
a third irradiation step of, after the second irradiation step, either irradiating the first coating film and the second coating film with ionizing radiation, or irradiating the first coating film and the second coating film with UV light having a wavelength longer than that of the light used in the second irradiation step.

17. The method of producing a decorative sheet according to claim 15 or 16 wherein irradiation of the ionizing radiation or the UV light to the first coating film in the first irradiation step is performed so that a ratio of the number of C=C bonds after irradiation to the number of C=C bonds before irradiation is in the range of 5% or more and 80% or less.

18. The method of producing a decorative sheet according to any one of claims 15 to 17, wherein irradiation of the ionizing radiation or the UV light to the first coating film in the first irradiation step is performed so that an integrated irradiation quantity relative to a minimum integrated irradiation quantity required for fully curing the first coating film is in the range of 3% or more and 30% or less.

19. The method of producing a decorative sheet according to any one of claims 15 to 18, wherein irradiation of the ionizing radiation or the UV light to the first coating film in the first irradiation step is performed so that an absorbed dose relative to a minimum absorbed dose required for fully curing the first coating film is in the range of 0.2% or more and 50% or less.
